# EUROPEAN PATENT APPLICATION

(11) **EP 4 528 949 A1**
(43) Date of publication of application: **26.03.2025**
(21) Application number: 23198592.0
(22) Date of filing: 20.09.2023
(51) Int. Cl.: H02G 1/14, H02G 15/14, H02G 1/16, H01B 7/282

(54) **POWER CABLE WITH LAYER HAVING ANISOTROPIC THERMAL CONDUCTIVITY**

(71) Applicant: NKT HV Cables AB, 371 60 Lyckeby (SE)
(72) Inventor: MATTSSON, Andreas, Karlskrona (SE); RÉBILLARD, Eric, Karlskrona (SE); LÅNGSTRÖM, Sonny, Karlskrona (SE); HARALDSSON, Håkan, Nättraby (SE); ERICSSON, Johnny, Rödeby (SE)
(74) Representative: Kransell & Wennborg KB

(57) **Abstract**

A power cable comprising: a first cable section, a second cable section, each of the first cable section and the second cable section comprising: a conductor section, and an insulation system arranged around the conductor section, the insulation system comprising an inner semiconducting layer, an insulation layer arranged around the inner semiconducting layer, and an outer semiconducting layer arranged around the insulation layer, and a metallic radial water barrier (13) arranged around the outer semiconducting layer; and an intermediate cable section (1c) located between the first cable section and the second cable section, the intermediate cable section (1c) comprising: an intermediate conductor section (3'), an intermediate cable section insulation system (5') arranged around the intermediate conductor section (3'), the intermediate cable section insulation system (5') extending between and joining the insulation systems of the first cable section and the second cable section, an intermediate cable section bedding layer (12') arranged around the intermediate cable section insulation system (5'), and a metallic radial intermediate cable section water barrier (13'), arranged around the intermediate cable section bedding layer (12'), the metallic radial intermediate cable section water barrier (13') being thermally joined with the metallic radial water barrier (13) of the first cable section (1a) and of the second cable section, wherein A) the metallic radial water barrier (13) of the first and/or the second cable section is leadfree, and/or B) the metallic radial intermediate cable section water barrier (13') is leadfree, wherein the intermediate cable section bedding layer (12') has an anisotropic thermal conductivity, with a higher thermal conductivity in a longitudinal axial direction of the power cable than in a radial direction of the power cable.

## Description

### TECHNICAL FIELD

The present disclosure generally relates to power cables.

### BACKGROUND

Submarine power cables have traditionally had a lead sheath which acts as a radial water barrier protecting the insulation system.

There is a trend towards a lead-free radial water barrier design. There have been proposals of water barriers of for example copper, various copper alloys, aluminium, and stainless steel.

Typically, the water barrier is made by first longitudinally wrapping a metal tape around the insulation system and then welding opposite edges of the metal tape in the longitudinal direction of the cable.

There are challenges with the use of leadfree metal materials in the water barrier. When the metallic water barrier is to be jointed between two conductor sections, such as in a cable joint region or in a region where the insulation system has been repaired, the heat generated in conjunction with welding or soldering of leadfree materials is much higher than for a lead water barrier due to the higher welding or soldering temperatures required. This could risk damaging underlying layers such as the insulation system.

### SUMMARY

In view of the above, an object of the present disclosure is to provide a power cable which solves or at least mitigates the problems of the prior art.

There is hence according to a first aspect of the present disclosure provided a power cable comprising: a first cable section, a second cable section, each of the first cable section and the second cable section comprising: a conductor section, and an insulation system arranged around the conductor section, the insulation system comprising an inner semiconducting layer, an insulation layer arranged around the inner semiconducting layer, and an outer semiconducting layer arranged around the insulation layer, and a metallic radial water barrier arranged around the outer semiconducting layer; and an intermediate cable section located between the first cable section and the second cable section, the intermediate cable section comprising: an intermediate conductor section, an intermediate cable section insulation system arranged around the intermediate conductor section, the intermediate cable section insulation system extending between and joining the insulation systems of the first cable section and the second cable section, an intermediate cable section bedding layer arranged around the intermediate cable section insulation system, and a metallic radial intermediate cable section water barrier, arranged around the intermediate cable section bedding layer, the metallic radial intermediate cable section water barrier being thermally joined with the metallic radial water barrier of the first cable section and of the second cable section, wherein A) the metallic radial water barrier of the first and/or the second cable section is leadfree, and/or B) the metallic radial intermediate cable section water barrier is leadfree, wherein the intermediate cable section bedding layer has an anisotropic thermal conductivity, with a higher thermal conductivity in a longitudinal axial direction of the power cable than in a radial direction of the power cable.

The anisotropic intermediate cable section bedding layer thus reduces the heat propagation in the radial direction, to underlying layers such as the intermediate cable section insulation system. The risk of damaging any underlying layer due to heat is thus reduced in the process of thermally joining the metallic radial intermediate cable section water barrier with the metallic radial water barrier of the first and the second cable section.

The metallic radial water barrier of at least one, or both, of the first cable section and the second cable section may be made of the same metal material as the metallic radial intermediate cable section water barrier.

The insulation system of the first cable section may be an extruded insulation system. The insulation systems may thus be polymer-based, for example polyolefin-based.

The intermediate cable section insulation system may be made of tapes wound around the intermediate conductor section and heated under pressure, or by a moulding process. The intermediate cable section insulation system may thus be polymer-based, for example polyolefin-based.

According to one embodiment the metallic radial water barrier of the first cable section and/or the second cable section comprises one of copper, a copper alloy, aluminium, or stainless steel.

The melting temperatures of copper and stainless steel is about 1100° and 1400°C, respectively, which is well above the melting temperature of the insulation system, which for typical polymer-based extruded materials start to melt at temperatures above e.g., 125°C.

According to one embodiment the metallic radial intermediate cable section water barrier comprises one of copper, a copper alloy, aluminium, or stainless steel.

One embodiment comprises an intermediate cable section polymer layer arranged around the metallic radial intermediate cable section water barrier.

One embodiment comprises a bedding layer arranged around the insulation system of the first cable section and the second cable section, underneath the metallic radial water barrier, wherein the intermediate cable section bedding layer is arranged axially between and in direct contact with the bedding layer of the first cable section and of the second cable section.

According to one embodiment the bedding layer of the first cable section and the second cable section comprises swelling tape. The swelling tape may be arranged underneath the metallic radial water barrier, over the insulation system.

One embodiment comprises a water swellable material arranged between the intermediate cable section insulation system and the intermediate cable section bedding layer. Such water swellable material often have a melting point around 250°C, which is well below the temperatures required to thermally join two metal material of which at least one is leadfree.

According to one example, the intermediate cable section bedding layer is a tape, or formed from a tape.

According to one embodiment, the intermediate cable section bedding layer may comprise two layers, of which a radially outer layer has the anisotropic thermal conductivity, and an inner layer which comprises water swellable material. The outer layer and the inner layer may for example be laminated.

According to one embodiment the metallic radial intermediate cable section water barrier is thermally joined with the metallic radial water barrier of the first cable section and of the second cable section by welding or soldering.

The metallic radial intermediate cable section water barrier is thermally joined with the metallic radial water barrier of the first cable section and of the second cable section along the entire perimeter of the power cable.

According to one embodiment the intermediate cable section bedding layer comprises pyrolytic graphite.

The intermediate cable section bedding layer may for example comprise SIGRAFLEX^{®} flexible graphite tape or foil.

According to one embodiment the power cable is a submarine power cable.

The power cable may be a medium voltage or a high voltage submarine power cable. With high voltage is meant a nominal voltage of the power cable of 30 kV or more.

The metallic radial water barriers may be smooth or corrugated. If the metallic radial water barriers are smooth, the metallic radial intermediate cable section water barrier may be closer to an underlying layer, and thus the heat developed during thermal joining may potentially affect underlying layers more than if the thermal joining is made at a crest of corrugated metallic radial water barriers.

The metallic radial intermediate cable section water barrier may be smooth or corrugated.

There is according to a second aspect of the present disclosure provided a method of making a joint between a metallic radial water barrier of a first cable section and of a second cable section of a power cable of the first aspect, comprising: a) making an intermediate cable section insulation system which connects with the insulation system of the first cable section and of the second cable section, b) providing the intermediate cable section bedding layer around the intermediate cable section insulation system, c) providing the metallic radial intermediate cable section water barrier around the intermediate cable section bedding layer, and d) thermally joining the metallic radial intermediate cable section water barrier with the metallic radial water barrier of the first cable section and of the second cable section.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a side view of a portion of an example of a power cable;
Fig. 2 schematically shows a cross-sectional view of an example of the power cable along section A-A in Fig. 1; and
Fig. 3 schematically shows sectional side view of a portion of the power cable in Fig. 1, including the intermediate cable section, up to the polymer layer, for reasons of simplicity; and
Fig. 4 shows a method of making a joint between the metallic radial water barrier of a first and a second cable section.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

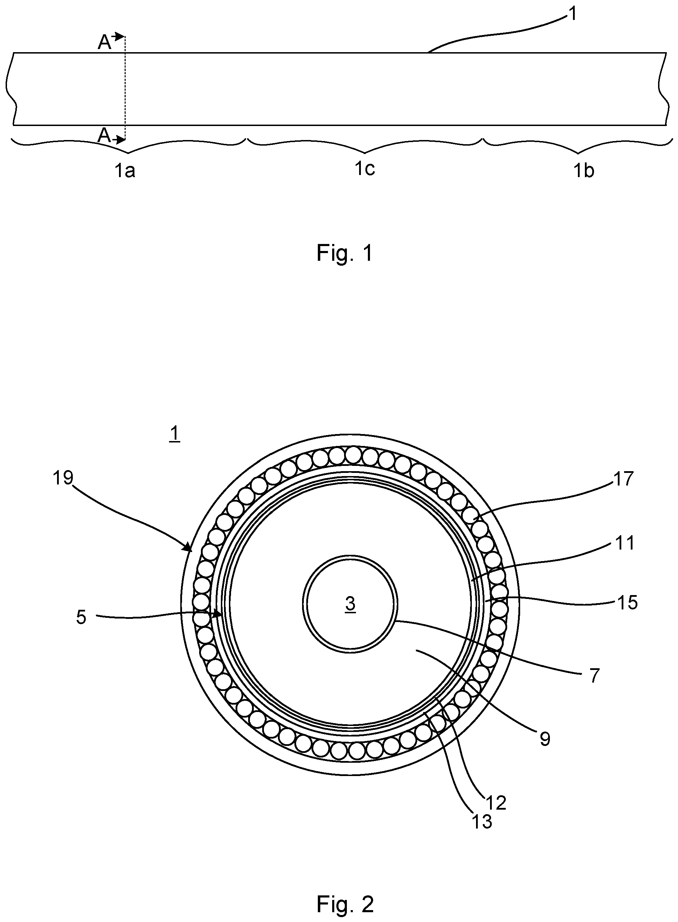

Fig. 1 shows an axial portion of an example of a power cable 1 according to the present disclosure.

The power cable 1 may be a submarine power cable, or alternatively an underground power cable.

The power cable 1 has a first cable section 1a and a second cable section 1b.

The power cable 1 has an intermediate cable section 1c located between the first cable section 1a and the second cable section 1b.

The first cable section 1a, the intermediate cable section 1c, and the second cable section 1b are axial cable sections of the power cable 1.

The first cable section 1a, the intermediate cable section 1c, and the second cable section 1b are subsequently arranged in a longitudinal axial direction of the power cable 1 in a direction from the first cable section 1a towards the second cable section 1b. The first cable section 1a transitions into the intermediate cable section 1c, and the intermediate cable section 1c transitions into the second cable section 1b.

The intermediate cable section 1c directly neighbours the first cable section 1a and the second cable section 1b.

Fig. 2 shows a cross section of the power cable 1 along lines A-A.

Although the exemplified power cable 1 depicts a single core power cable, the power cable 1 could alternatively be a multi-core power cable.

The power cable 1 may be an AC power cable or a DC power cable.

The power cable 1 comprises a conductor 3, and an insulation system 5 arranged around the conductor 3. This configuration is the same for the first cable section 1a and the second cable section 1b.

The axial sections of the conductor 3 which extend along the first cable section 1a and the second cable section 1b are termed "conductor sections" herein.

The insulation system 5 comprises an inner semiconducting layer 7 which is arranged around the conductor 3, an insulation layer 9 arranged around the inner semiconducting layer 7, and an outer semiconducting layer 11 arranged around the insulation layer 9.

The insulation system 5 may be an extruded insulation system or a paper-based insulation system which is impregnated with insulating fluid such as an oil.

In case the insulation system 5 is an extruded insulation system, the insulation system comprises a polymer material such as polyethylene, crosslinked polyethylene, polypropylene, ethylene propylene rubber (EPR) or ethylene propylene diene monomer rubber (EPDM).

The power cable 1 may comprise a bedding layer 12. The bedding layer 12 is arranged around the insulation system 5. The bedding layer 12 may comprise a swelling tape. The swelling tape may be wound around the insulation system 5.

The power cable 1 comprises a metallic radial water barrier 13. The metallic radial water barrier 13 is a layer arranged around the insulation system 5. In case the bedding layer 12 is present, the metallic radial water barrier 13 is arranged around the bedding layer 12.

The metallic radial water barrier 13 may be leadfree or it may be made of lead. If leadfree, the metallic radial water barrier 13 may comprise copper, a copper alloy, aluminium, or a stainless steel, for example. The metallic radial water barrier of the second cable section 1b may be of the same material as the metallic radial water barrier 13 of the first cable section 1a. Alternatively, the metallic radial water barrier of the second cable section 1b may be made of a different material than the metallic radial water barrier 13 of the first cable section 1a. Thus, for example both metallic radial water barriers may be made of lead, or both may be leadfree, or one of them may be made of lead while the other may be made of e.g., copper, a copper alloy, aluminium, or a stainless steel.

The metallic radial water barrier 13 has a longitudinal weld seam if leadfree. The longitudinal weld seam may for example have been formed without utilisation of any filler material. The metallic radial water barrier 13 may thus have been autogenously welded.

The power cable 1 comprises a polymer layer 15 arranged around the metallic radial water barrier 13. The polymer layer 15 may be extruded onto the metallic radial water barrier 13.

The polymer layer 15 may according to one example be bonded to the outer surface of the metallic radial water barrier 13 by means of an adhesive such as a hot melt adhesive.

The power cable 1 may comprise an armour layer comprising a plurality of armour elements 17 laid helically around the polymer layer 15 in one or more layers.

The power cable 1 may have an outer layer 19 which may be an outer sheath composed of a polymer material, or an outer serving composed of a plurality of helically wound polymeric elements.

The power cable 1 may comprise additional layers not disclosed herein, for example an anti-corrosion layer made of e.g., bitumen, outside the armour layer.

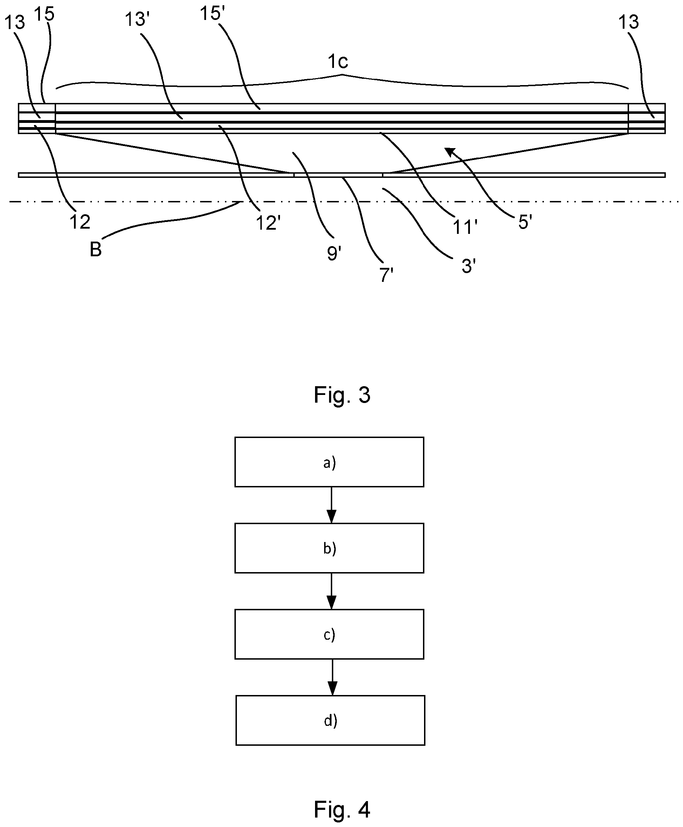

Fig. 3 is a longitudinal section of the power cable 1 depicting the intermediate cable section 1c. Layers of the power cable are only shown up until the polymer layer 15/intermediate cable section polymer layer 15' of the intermediate cable section 1c. The axis B is a symmetry axis of the power cable 1.

The intermediate cable section 1c comprises an intermediate conductor section 3'. The intermediate conductor section 3' forms part of the conductor 3 of the power cable 1.

The intermediate cable section 1c comprises an intermediate cable section insulation system 5' arranged around the intermediate conductor section 3'.

The intermediate cable section insulation system 5' comprises an inner semiconducting layer 7' arranged around the intermediate conductor section 3', an insulation layer 9' arranged around the inner semiconducting layer 7', and an outer semiconducting layer 11' arranged around the insulation layer 9'.

The intermediate cable section insulation system 5' is a restored insulation system.

The intermediate conductor section 3' may comprise a conductor joint. In this case, the intermediate cable section insulation system 5' is restored over the conductor joint and connects with the insulation systems 5 of the first cable section 1a and the second cable section 1b. Alternatively, the intermediate conductor section 3' may be without a conductor joint, for example, if the intermediate insulation system 5' has been restored to due to the insulation system originally present having been damaged.

The intermediate cable section 1c comprises an intermediate cable section bedding layer 12'. The intermediate cable section bedding layer 12' is arranged around the intermediate cable section insulation system 5'. The intermediate cable section bedding layer 12' has an anisotropic thermal conductivity, with a higher thermal conductivity in a longitudinal axial direction of the power cable 1 than in a radial direction of the power cable 1. The intermediate cable section bedding layer 12' thus leads heat axially but generally not as well in the radial direction of the power cable 1.

The intermediate cable section bedding layer 12' may for example be a tape, or it may be extruded onto the intermediate cable section insulation system 5'.

According to one example, the intermediate cable section bedding layer 12' may comprise two layers, which may be laminated. One of the layers may be a radially outer layer which has the anisotropic thermal conductivity property. The other layer may be an inner layer which comprises water swellable material.

The power cable 1 may according to one example comprise a water swellable material arranged between the intermediate cable section insulation system 5' and the intermediate cable section bedding layer 12', in which case the water swellable material is a distinct layer from the intermediate cable section bedding layer 12', i.e., the two layers have been applied separately.

The intermediate cable section bedding layer 12' may be in direct contact with the bedding layers 12 of the first cable section 1a and the second cable section 1b if present along the first cable section 1 and the second cable section 1b.

The intermediate cable section 1c has a metallic radial intermediate cable section water barrier 13'. The metallic radial intermediate cable section water barrier 13' is arranged around the intermediate cable section bedding layer 12'.

The metallic radial intermediate cable section water barrier 13' may be made of lead. In this case, the metallic radial water barrier 13 of at least one of the first cable section 1a and the second cable section 1b is leadfree. The metallic radial intermediate cable section water barrier 13' may alternatively be leadfree. The metallic radial intermediate cable section water barrier 13' may in this case for example comprise copper, a copper alloy, aluminium, or a stainless steel.

The metallic radial intermediate cable section water barrier 13' is thermally joined with the metallic radial water barrier 13 of the first cable section 1a and the second cable section 1b. The thermal joining is by welding or soldering.

The intermediate cable section 1c may comprise an intermediate cable section polymer layer 15' arranged around the metallic radial intermediate cable section water barrier 13'. The intermediate cable section polymer layer 15' may be formed by a heat shrink tube, by tape, or it may be extruded, for example. The intermediate cable section polymer layer 15' directly contacts the polymer layer 15 of the first cable section 1a and of the second cable section 1b.

According to one example, the bedding layers 12 of one of or both the first cable section 1a and the second cable section 1b may also have an anisotropic thermal conductivity, with a higher thermal conductivity in a longitudinal axial direction of the power cable 1 than in a radial direction of the power cable 1. Thus, in this case the bedding layer(s) 12 and the intermediate cable section bedding layer 12' has an anisotropic thermal conductivity. The bedding layers 12, 12' thus have an anisotropic thermal conductivity along all three cable sections 1a, 1b, 1c. The bedding layer 12, 12' may according to one example have an anisotropic thermal conductivity along the entire length of the power cable 1.

In case the power cable 1 is a multi-core power cable, each core may have the structure described above.

A method of making a joint between the metallic radial water barrier 13 of the first cable section 1a and the second cable section 1b will now be described with reference to Fig. 4.

The jointing may be a process of making a conductor joint between the first cable section 1a and the second cable section 1b, or a process of repairing a damaged section of the power cable 1.

In case a conductor joint is to made, the ends of the first cable section 1a and the second cable section 1b are prepared by exposing an end portion of the respective conductor section. The conductor sections are then joined to form the conductor joint. Additionally, the insulation system is mechanically processed e.g., by stripping part of the outer semiconducting layer and making the insulation layer taper.

In case a cable repair is to be made, the insulation system is mechanically processed similarly as described above.

In a step a) the intermediate cable section insulation system 5' is made. The intermediate cable section insulation system 5' connects with the insulation system 5 of the first cable section 1a and of the second cable section 1b. This may for example be done by winding tapes and heating the tapes under pressure, or by moulding.

In a step b) the intermediate cable section bedding layer 12' is provided around the intermediate cable section insulation system 5'. The intermediate cable section bedding layer 12' may for example be formed by a tape that is wound around the intermediate cable section bedding layer 12'.

In a step c) the metallic radial intermediate cable section water barrier 13' is provided around the intermediate cable section bedding layer 12'. The metallic radial intermediate cable section water barrier 13' may for example be made of a tube that is slid over the intermediate cable section 1c after the intermediate cable section bedding layer 12' has been formed in step b).

In a step d) the metallic radial intermediate cable section water barrier 13' is thermally joined with the metallic radial water barriers 13 of the first cable section and the second cable section. The thermal joining is along the entire circumference of the metallic radial intermediate cable section water barrier 13' and the metallic radial water barriers 13. The thermal joining may be made by welding or soldering such as soft soldering.

The intermediate cable section polymer layer 15' may be arranged around the metallic radial intermediate cable section water barrier 13'. According to one example, the intermediate cable section polymer layer 15' is glued onto the metallic radial intermediate cable section water barrier 13'. The glue may be a hot melt adhesive which is heated to make the intermediate cable section polymer layer 15' adhere to the metallic radial intermediate cable section water barrier 13'.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Power cable (1) comprising:
a first cable section (1a),
a second cable section (1b),
each of the first cable section (1a) and the second cable section (1b) comprising:
a conductor section, and
an insulation system (5) arranged around the conductor section, the insulation system (5) comprising an inner semiconducting layer (7), an insulation layer (9) arranged around the inner semiconducting layer (7), and an outer semiconducting layer (11) arranged around the insulation layer (9), and
a metallic radial water barrier (13) arranged around the outer semiconducting layer (11); and
an intermediate cable section (1c) located between the first cable section (1a) and the second cable section (1b), the intermediate cable section (1c) comprising:
an intermediate conductor section (3'),
an intermediate cable section insulation system (5') arranged around the intermediate conductor section (3'), the intermediate cable section insulation system (5') extending between and joining the insulation systems (5) of the first cable section (1a) and the second cable section (1b),
an intermediate cable section bedding layer (12') arranged around the intermediate cable section insulation system (5'), and a metallic radial intermediate cable section water barrier (13'), arranged around the intermediate cable section bedding layer (12'), the metallic radial intermediate cable section water barrier (13') being thermally joined with the metallic radial water barrier (13) of the first cable section (1a) and of the second cable section (1b), wherein A) the metallic radial water barrier (13) of the first and/or the second cable section (1a, 1b) is leadfree, and/or B) the metallic radial intermediate cable section water barrier (13') is leadfree,
wherein the intermediate cable section bedding layer (12') has an anisotropic thermal conductivity, with a higher thermal conductivity in a longitudinal axial direction of the power cable than in a radial direction of the power cable (1).

2. Power cable (1) as claimed in claim 1, wherein the metallic radial water barrier (13) of the first cable section (1a) and/or the second cable section (1b) comprises one of copper, a copper alloy, aluminium, or stainless steel.

3. Power cable (1) as claimed in any of the preceding claims, wherein the metallic radial intermediate cable section water barrier (13') comprises one of copper, a copper alloy, aluminium, or stainless steel.

4. Power cable (1) as claimed in any of the preceding claims, comprising an intermediate cable section polymer layer (15') arranged around the metallic radial intermediate cable section water barrier (13').

5. Power cable (1) as claimed in any of the preceding claims, comprising a bedding layer (12) arranged around the insulation system (5) of the first cable section (1a) and the second cable section (1b), underneath the metallic radial water barrier (13), wherein the intermediate cable section bedding layer (12') is arranged axially between and in direct contact with the bedding layer (12) of the first cable section (1a) and of the second cable section (1b).

6. Power cable (1) as claimed in claim 5, wherein the bedding layer (12) of the first cable section (1a) and the second cable section (1b) comprises swelling tape.

7. Power cable (1) as claimed in any of the preceding claims, comprising a water swellable material arranged between the intermediate cable section insulation system (5') and the intermediate cable section bedding layer (12').

8. Power cable (1) as claimed in any of claims 1-6, wherein the intermediate cable section bedding layer (12') comprise two layers, of which a radially outer layer has the anisotropic thermal conductivity, and an inner layer which comprises water swellable material.

9. Power cable (1) as claimed in any of the preceding claims, wherein the metallic radial intermediate cable section water barrier (13') is thermally joined with the metallic radial water barrier (13) of the first cable section (1a) and of the second cable section (1b) by welding or soldering.

10. Power cable (1) as claimed in any of the preceding claims, wherein the intermediate cable section bedding layer (12') comprises pyrolytic graphite.

11. Power cable (1) as claimed in any of the preceding claims, wherein the power cable (1) is a submarine power cable.

12. Method of making a joint between a metallic radial water barrier (13) of a first cable section (1a) and of a second cable section (1b) of a power cable (1) as claimed in any of the preceding claims, comprising:
a) making the intermediate cable section insulation system (5') which connects with the insulation system (5) of the first cable section (1a) and of the second cable section (1b),
b) providing the intermediate cable section bedding layer (12') around the intermediate cable section insulation system (5'),
c) providing the metallic radial intermediate cable section water barrier (13') around the intermediate cable section bedding layer (12'), and
d) thermally joining the metallic radial intermediate cable section water barrier (13') with the metallic radial water barrier (13) of the first cable section (1a) and of the second cable section (1b).
